# EUROPÄISCHE PATENTANMELDUNG

(11) **EP 2 339 124 A1**
(43) Veröffentlichungstag der Anmeldung: **29.06.2011**
(21) Anmeldenummer: 09016106.8
(22) Anmeldetag: 28.12.2009
(51) Int. Cl.: F01D 11/00, F16J 15/32, F16J 15/16

(54) **Rotor mit Bürstendichtung, und zugehöriges Herstellungsverfahren**

(71) Anmelder: Siemens Aktiengesellschaft, 80333 München (DE)
(72) Erfinder: Flegler, Johan, 45131 Essen (DE); Schettel, Joachim, Dr., 47228 Duisburg (DE)

(57) **Zusammenfassung**

Die Erfindung betrifft eine Bürstendichtung (6) für eine Strömungsmaschine sowie ein Verfahren zur Abdichtungen eines Spaltes (5) in einer Strömungsmaschine, wobei die Bürstendichtung (6) auf der rotierenden Komponente (1) angeordnet ist.

## Beschreibung

Die Erfindung betrifft eine rotierende Komponente sowie ein Verfahren zur Abdichtung eines Spaltes in einer Strömungsmaschine.

In Dampfturbinen, als Ausführungsform einer Strömungsmaschine, ist üblicher Weise ein um eine Rotationsachse gelagerter Rotor innerhalb eines Gehäuses drehbar angeordnet. Die Rotoren von Dampfturbinen werden mit einer Frequenz von üblicher Weise 50 bzw. 60 Hz betrieben. Ein Strömungsmedium, das bei Dampfturbinen ein Wasserdampf ist, strömt hierbei zwischen sog. Leit- und Laufschaufeln entlang eines Strömungspfades. Bei der Entwicklung von Dampfturbinen wird mit großen Anstrengungen dafür Sorge getragen, dass der Wirkungsgrad entsprechend hoch und dass unter anderem die Lebensdauer entsprechend lang ist. Üblicherweise treten bei Systemen mit einer um eine Drehachse drehbar gelagerten rotierenden Komponente, wie z.B. dem Dampfturbinenrotor, Herausforderungen auf, um einen Spalt zwischen der rotierenden Komponente und dem gegenüber der rotierenden Komponente angeordneten Gehäuse abzudichten. Es sind verschiedene Dichtungen derzeit bekannt, um den Spalt zwischen einer rotierenden Komponente und einem Gehäuse abzudichten. So ist es bekannt, beispielsweise Labyrinthdichtungen einzusetzen, die sog. Dichtspitzen aufweisen, die sowohl auf der rotierenden Komponente als auch auf der gegenüberliegenden Komponente, dem Gehäuse, aufgebracht werden können. Allerdings sind Labyrinthdichtungen sog. berührungsfreie Dichtungen. Das bedeutet, dass bei Labyrinthdichtungen naturgemäß immer ein Leckagestrom entsteht.

Eine weitere Dichtungsmöglichkeit besteht in der Anbringung von Bürstendichtungen. Bürstendichtungen sind seit langem bekannt und umfassen in verschiedenen Ausführungsformen mehrere Borsten, die im Gehäuse angeordnet werden und in den Spalt ragen und die rotierende Komponente berühren. Die Borsten sind daher flexibel ausgebildet und können bei Berührung mit dem Rotor gebogen und verkrümmt werden. Allerdings treten unterschiedliche Probleme bei der Anbringung von Bürstendichtungen im Gehäuse auf. Dies könnte z.B. das sog. Hot-Spot-Phänomen sein, bei dem ein Teil der Rotoroberfläche durch ein Anstreifen der Bürstendichtungen derart erwärmt wird, dass dadurch ein verstärkender Effekt auftritt, bei dem der Rotor fortschreitend verkrümmt wird, aufgrund der eingebrachten Reibleistung in Form von Wärme. Dies wird auch als sanftes Anstreifen bzw. Softrubbing oder Spiralschwingung bzw. Spiral Vibration bezeichnet.

Ein weiteres Problem ist, dass bei zu großen Druckdifferenzen die Bürstendichtungen derart belastet werden, dass sich die Borsten in Strömungsrichtung verbiegen, so dass der freie Spalt vergrößert wird und dadurch sich die Dichtwirkung verschlechtert. Dieses Phänomen ist bekannt unter dem Begriff "Blow Over". Um dennoch große Druckdifferenzen über die Bürstendichtung abbauen zu können, werden mehrere baugleiche Bürstendichtungen hintereinander eingebaut. Allerdings stellen mehrere hintereinander anliegende Bürstendichtungen ein instabiles System dar, bei dem eine Bürste eine größere Druckdifferenz abbaut als die übrigen Bürstendichtungen. Dies führt zu einem schnelleren Verschleiß der betroffenen Dichtungen.

Es ist bekannt, die wärmetechnische Entkopplung der potentiellen Reibstelle vom Rotor durch Beschichtungen oder durch das Aufbringen wärmeentkoppelter Bauteile zu lösen, wie es in der US 2004/0086381 A1 und in der US 2004/0086378 A1 geschieht. Des Weiteren ist es bekannt, die Bürstendichtungen derart auf einem Absatz anzuordnen, dass die thermische Dehnung im Rotor nicht zu einer Verkrümmung führt, was in der US 2003/0059298 A1 beschrieben ist. Das Problem der sich verbiegenden Borsten wird in der DE 103 93 433 T5 dadurch gelöst, dass eine Dichtungsumgehungsvorrichtung angeordnet ist, die den Druckabfall an der Bürstendichtung begrenzt. Des Weiteren kann das Problem dadurch gelöst werden, dass vor und hinter jeder Bürstendichtung in einer Reihe der Druck durch geeignete Maßnahmen eingestellt wird. Beispielsweise kann dies in Dampfturbinen dadurch erreicht werden, dass eine Verbindung zu einer Stelle mit einem passenden Druckniveau im Schaufelpfad hergestellt wird.

Die vorgenannten Lösungen sind allerdings konstruktiv aufwändig und führen zu Mehrkosten bei der Herstellung der Dampfturbine. Wünschenswert wäre es, eine einfache Möglichkeit zu haben, um einen Spalt zwischen einer rotierenden Komponente und dem Gehäuse abzudichten.

An dieser Stelle setzt die Erfindung an, deren Aufgabe es ist, eine rotierende Komponente und ein Verfahren zur Abdichtung einer Spaltes in einer Strömungsmaschine anzugeben, das leicht herzustellen ist.

Gelöst wird diese Aufgabe durch eine rotierende Komponente umfassend eine Bürstendichtung. Die auf das Verfahren hingerichtet Aufgabe wird gelöst durch ein Verfahren zur Abdichtung eines Spaltes in einer Strömungsmaschine, wobei die Strömungsmaschine einen Rotor und einen um den Rotor angeordnetes Gehäuse umfasst, wobei eine Bürstendichtung auf der Rotoroberfläche angeordnet wird.

Die Erfindung schlägt somit den Weg ein, die Bürstendichtungen nicht wie bisher auf dem Gehäuse, d.h. auf einer statischen Komponente anzuordnen, sondern auf um eine Rotationsachse drehbar gelagerte rotierende Komponente aufzubringen. Die rotierende Komponente dreht mit einer vergleichsweisen hohen Frequenz, so dass Fliehkräfte in der Bürstendichtung auftreten, die allerdings so bemessen sein sollten, dass im Betrieb diese Fliehkraft zu einer optimalen Abdichtung eines zwischen der rotierenden Komponente und dem Gehäuse anliegenden Spalt führt. Die Bürstendichtung wird im Sinne der Erfindung hierbei auf bzw. in der rotierenden Komponente angebracht. Die Befestigung der Bürstendichtung im Rotor ist so ausgeführt, dass eine thermische Dehnung der Bürstendichtung nicht zu einer Verkrümmung des Rotors führt.

Vorteilhafte Weiterbildungen sind in den Unteransprüchen angegeben.

Die Erfindung geht von dem Aspekt aus, dass die an den Borstenspitzen entstehende Reibwärme den Rotor nicht thermisch verformen kann. Erfindungsgemäß werden die Geometrie der Borsten, der Bürstendichtung und das verwendete Material so gewählt, dass die im Betrieb auftretende Fliehkraft den Spalt zwischen der rotierenden Komponente und der stationären Komponente wirksam schließt. Dadurch sind mehrstufige Anordnungen von Bürstendichtungen nicht mehr instabil, da die Fliehkraft für die Bürstendichtungen gleich groß ist.

In einer ersten vorteilhaften Weiterbildung umfasst die Bürstendichtung mehrere Borsten, wobei die rotierende Komponente um eine Rotationsachse rotierbar ist und die Borste derart ausgebildet ist, dass im Betrieb die Borste unter Fliehkrafteinwirkung bewegbar ist. Da die Bewegbarkeit der Borsten nur unter Fliehkraftwirkung erfolgt, ist es klar, dass die Borste weg von der rotierenden Komponente bewegt wird. Ein zwischen der rotierenden Komponente und einer gegenüber der rotierenden Komponente angeordnete stationäre Komponente gebildeter Spalt wird dadurch wirksam abgedichtet. Die Materialien und die Anordnung der Borsten sollte derart gewählt werden, dass durch die im Betrieb auftretende Fliehkraft der Spalt wirksam abgedichtet wird.

In einer weiteren vorteilhaften Weiterbildung werden die Borsten schräg zu einer radialen Richtung bezüglich der Rotationsachse eingebaut. Das bedeutet, dass die Borsten ohne Fliehkraftwirkung schräg zu einer radialen Richtung bezüglich der Rotationsachse angeordnet sind. Die radiale Richtung bezüglich der Rotationsachse ist identisch mit der Fliehkraft, die im Betrieb auftritt. Sobald die rotierende Komponente um die Rotationsachse rotiert, entsteht eine Fliehkraftwirkung, die auf die Borsten wirkt und die schräg angestellten Borsten in Richtung des Spaltes aufstellt und somit einen zwischen der rotierenden Komponente und der stationären Komponente befindlichen Spalt abdichtet.

In einer alternativen Ausführungsform der Erfindung können die Borsten ohne Fliehkraftwirkung länglich in radialer Richtung ausgebildet sein. Gegenüber den schräg angestellten Borsten entfällt bei dieser Ausführungsform ein Aufstellen der Borsten. Die Borsten werden im Betrieb durch die Fliehkraftwirkung derart verändert, dass die Länge der Borsten zunimmt und einen Spalt zu einer stationären Komponente abdichtet.

In einer vorteilhaften Weiterbildung weist die Borste eine Borstenspitze, eine mit der rotierenden Komponente verbundenen Borstenfuß und einen zwischen der Borstenspitze und Borstenfuß angeordneten Borstenkörper auf, wobei die Borstenspitze gegenüber dem Borstenkörper eine höhere Masse aufweist. Durch eine an der Borstenspitze angeordnete höhere Masse wird die Fliehkraftwirkung verstärkt. Die Größe der Fliehkraft ist abhängig von der Masse, was dazu führt, dass eine höhere Masse an der Borstenspitze zu einer vergrößerten Fliehkraft führt, die so an der gesamten Borste, insbesondere dem Borstenkörper und dem Borstenfuß zieht. Eine Längenausdehnung der Borste ist dadurch vergrößert. Eine Abdichtung des Spaltes ist dadurch verbessert.

Erfindungsgemäß wird die höhere Masse durch eine vergrößerte Massendichte der Borstenspitze gegenüber dem Borstenkörper erreicht. Das bedeutet, dass die Borstenspitze entweder mit einem anderen Material ausgebildet wird, dessen Dichte größer ist als die Dichte der restlichen Borsten, insbesondere dem Borstenkörper und dem Borstenfuß. Diese separate Masse wird mit geeigneten Verfahren an die Borstenkörper verbunden. Eine alternative Möglichkeit die Masse der Borstenspitze gegenüber dem Borstenkörper zu vergrößern, ist erfindungsgemäß dadurch gegeben, dass die Borstenspitze gegenüber dem Borstenkörper vergrößert, insbesondere kugelförmig ausgebildet ist. Durch das größere Volumen der Borstenspitze gegenüber dem Borstenkörper ist die Masse höher.

In einer weiteren vorteilhaften Weiterbildung umfasst die Bürstendichtung mehrere Borsten sowie eine Verdickung auf, die mit der rotierenden Komponente fest verbunden ist.

Durch die Verdickung, wird eine Möglichkeit bereitgestellt, die Bürstendichtung sicher auf bzw. in der rotierenden Komponente anzuordnen. Die Verdickung wird dabei derart gegen die rotierende Komponente angelegt, dass bei einer Fliehkraft die Verdickung gegen die rotierende Komponente drückt.

In einer weiteren vorteilhaften Weiterbildung weist die rotierende Komponente einen Vorsprung auf, der zumindest teilweise die Verdickung ummantelt. Günstig im Sinne der Erfindung ist es, wenn hierbei der Vorsprung derart angeordnet wird, dass die Verdickung nahezu komplett ummantelt wird und lediglich die Borsten aus der rotierenden Komponente ragen.

Die Verdickung ist vorteilhafter Weise im Wesentlichen zylinder- oder kugelsymmetrisch ausgebildet. Durch diese Form werden mechanische Spannungen in der rotierenden Komponente minimiert. Die mechanischen Spannungen in der rotierenden Komponente verteilen sich optimal um die Verdickung.

In einer weiteren vorteilhaften Weiterbildung ist die Verdickung in einer Halteaussparung angeordnet. Günstig im Sinne der Erfindung wird daher der Rotor derart ausgebildet, dass eine Aussparung im Rotor gebildet wird, in die die Verdickung angeordnet wird. Dazu weist die Halteaussparung im Wesentlichen die gleiche geometrische Form auf, wie die Verdickung der Bürstendichtung. In einer weiteren vorteilhaften Ausgestaltung sind die Borsten entlang einer Frontplatte angeordnet, die aus der Oberfläche der rotierenden Komponente hervorragt. Ein Verbiegen der Borsten wird dadurch wirksam vermieden. Des Weiteren wird in einer vorteilhaften Weiterbildung ein Verbiegen der Borsten dadurch vermieden, dass die Borsten entlang einer Rückplatte angeordnet sind, die aus der Oberfläche der rotierenden Komponente hervorragt, wobei die Borsten zwischen der Frontplatte und der Rückplatte angeordnet ist. Die Borsten werden daher mehr oder weniger zwischen der Frontplatte und der Rückplatte geführt und erfahren somit einen Gegendruck, sofern im Betrieb die Leckageströmung die Borstendichtung zur Seite drückt.

In einer vorteilhaften Weiterbildung ist die Frontplatte in Radialrichtung bezüglich der Rotationsachse verjüngt ausgebildet. Sinngemäß ist auch die Rückplatte entlang der Radialrichtung bezüglich der Rotationsachse verjüngt ausgebildet. Dies führt dazu, dass im Fall eines Anstreifens der Frontplatte und der Rückplatte am Gehäuse wenig Materialberührung zustande kommt zwischen der Frontplatte und der Rückplatte und dem Gehäuse.

In einer vorteilhaften Weiterbildung ist die rotierende Komponente als Rotor ausgebildet. Im Sinne der Erfindung wird demnach die Bürstendichtung komplett im Rotor angeordnet.

Günstig im Sinne der Erfindung wird die Bürstendichtung auf der Rotoroberfläche angeordnet.

Die auf das Verfahren hin gerichtete Lösung umfasst ein Verfahren zur Abdichtung eines Spaltes in einer Strömungsmaschine, die einen Rotor und einen um den Rotor angeordnetes Gehäuse umfasst, wobei eine Bürstendichtung auf der Rotoroberfläche angeordnet wird. Vorteilhafte Weiterbildungen werden hier in den weiteren Unteransprüchen angegeben. Die Vorteile der Unteransprüche ergeben sich sinngemäß aus denen zu der rotierenden Komponente angegebenen Vorteilen.

Nachstehend wird ein Ausführungsbeispiel der Erfindung unter Bezugnahme auf die schematische Zeichnung, auf die hinsichtlich aller erfindungswesentlichen Einzelheiten ausdrücklich verwiesen wird, erläutert.

In der Zeichnung zeigt:
- Figur 1: eine Schnittansicht durch einen Teil einer rotierenden Komponente,
- Figur 2: eine Schnittansicht einer Bürstendichtung in alternativer Ausführungsform,
- Figur 3: eine Draufsicht in Richtung der Rotationsachse der Bürstendichtung,
- Figur 4: eine gegenüber der Figur 3 alternative Ausführungsform der Bürste.

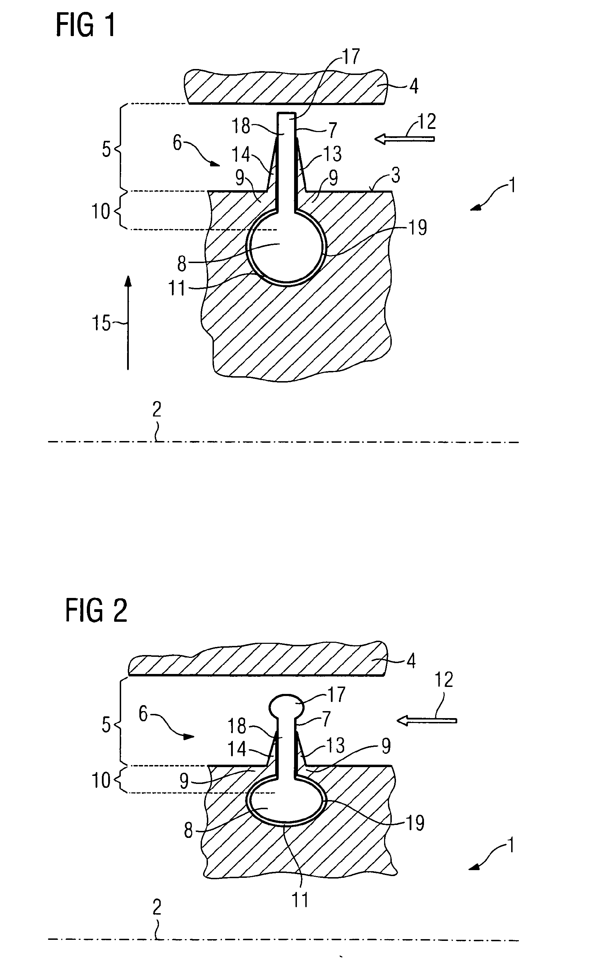

Die Figur 1 zeigt einen Ausschnitt einer rotierenden Komponente 1, die im Wesentlichen rotationssymmetrisch um eine Rotationsachse 2 drehbar gelagert ist. Die rotierende Komponente 1 kann beispielsweise ein Rotor einer Strömungsmaschine, insbesondere einer Dampfturbine sein. Die rotierende Komponente 1 umfasst eine Oberfläche 3 auf, die einer stationären Komponente 4 gegenüberliegt. Die stationäre Komponente 4 Stator 4 kann beispielsweise ein Gehäuse einer Dampfturbine sein. Zwischen der Oberfläche 3 und dem Stator 4 ist ein Spalt 5 ausgebildet, der durch eine Büstendichtung 6 abgedichtet werden soll. Die rotierende Komponente 1 umfasst hierzu die Bürstendichtung 6.

Die Bürstendichtung 6 umfasst mehrere, nicht im Detail gezeichnete Borsten 7, die an einem endseitigen Ende eine Verdickung 8 aufweisen. Diese Verdickung 8 ist mit der rotierenden Komponente 1 fest verbunden. Dazu weist die rotierende Komponente 1 einen Vorsprung 9 auf, der zumindest teilweise die Verdickung 8 im oberen Bereich 10 ummantelt.

Die Verdickung 8 ist im Wesentlichen zylinder- oder kugelsymmetrisch ausgebildet. Das bedeutet, dass eine Halteaussparung 11 in der rotierenden Komponente 1 ausgebildet ist, die als Nut in Umfangsrichtung verläuft. Dazu weist die geometrische Form der Halteaussparung 11 im Wesentlichen dieselbe geometrische Form wie die Verdickung 8 auf. Im Betrieb rotiert die rotierende Komponente 1 um die Rotationsachse 2, wobei ein Strömungsmedium aus einer Strömungsrichtung 12 strömt. Das aus der Strömungsrichtung 12 kommende Strömungsmedium kann dazu führen, dass die Borsten 7 zur Seite geneigt bzw. umgeknickt werden. Um dies zu verhindern, werden die Borsten 7 zwischen einer Frontplatte 13 und einer Rückplatte 14 angeordnet. Die Rückplatte 14 und die Frontplatte 13 sollten hierbei möglichst nah an den Borsten 7 angeordnet werden, damit kein Spiel zwischen den Borsten 7 und der Frontplatte 13 und der Rückplatte 14 entsteht.

Sollten im Betrieb dennoch die Frontplatte 13 bzw. Rückplatte 14 den Stator 4 berühren, sollte der Schaden im Stator 4 minimiert werden. Dazu werden die Frontplatte 13 und die Rückplatte 14 verjüngt in Radialrichtung 15 ausgebildet. Das bedeutet, dass die Frontplatte 13 und die Rückplatte 14 im Wesentlichen pfeilförmig in Radialrichtung 15 zulaufen.

Die rotierende Komponente 1 ist als Rotor ausgebildet. Die Büstendichtung 6 ist auf der Rotoroberfläche 3 angeordnet. Die Befestigung der Bürstendichtung 6 in der rotierenden Komponente 1 wird derart ausgelegt, dass eine thermische Dehnung der Büstendichtung 6 nicht zu einer Verkrümmung der rotierenden Komponente 1 führt.

In der Figur 2 ist eine alternative Ausführungsform der Borsten 7 zu sehen. Der Unterschied der Borste 7 gegenüber der Borste 7 7aus Figur 1 liegt darin, dass die Borste 7 eine Borstenspitze 17, einen Borstenfuß 19 und einen zwischen der Borstenspitze 17 und Borstenfuß 19 angeordneten Borstenkörper 18 aufweist. Das Volumen der Borstenspitze 17 ist im Vergleich zum Volumen des Borstenkörpers 18 vergrößert. Mit anderen Worten ist die Masse der Borstenspitze 17 vergrößert gegenüber dem Bostenkörper 18. Würde der Borstenkörper 18 länglich ausgebildet, d.h. die geometrische Form ändert sich im Wesentlichen nicht in Radialrichtung, würde an der Borstenspitze 17 keine zusätzliche Masse. Dadurch dass an der Borstenspitze 17 eine im Wesentlichen kugelförmige Ausbildung vorhanden ist, ist dort die Masse vergrößert, was im Betrieb zu einer erhöhten Fliehkraft führt.

In einer alternativen Ausführungsform kann der Borstenkopf 17 aus einem anderen Material wie der Borstenkörper 18 hergestellt sein, um eine größere spezifische Dichte aufzuweisen. Die Borstenspitze 17 muss mit geeigneten Maßnahmen mit dem Borstenkörper 18 fest verbunden werden.

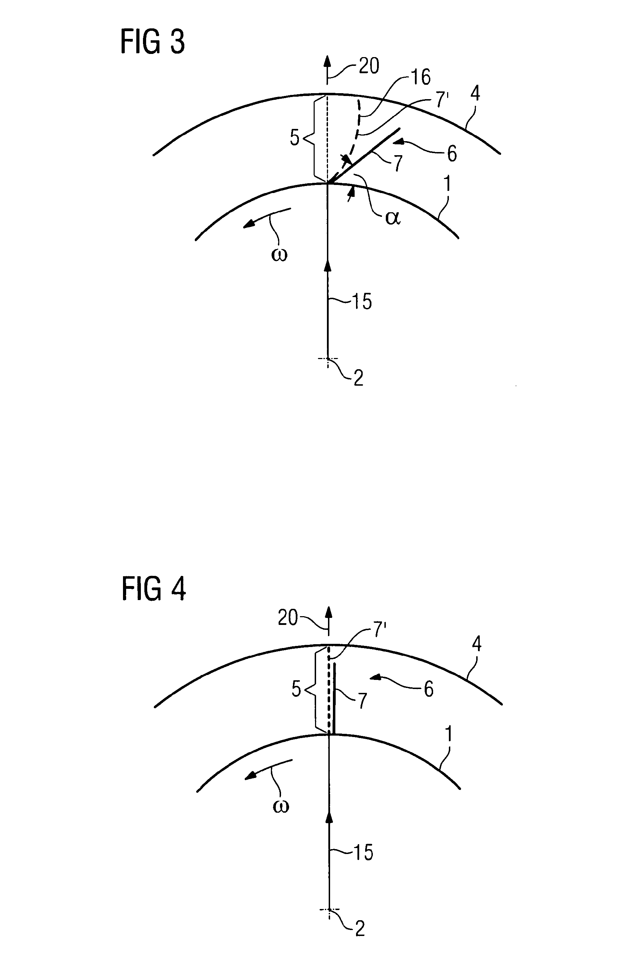

In Figur 3 ist eine Ansicht in Richtung der Rotationsachse 2 zu sehen. Die Borsten 7 werden unter einem Winkel α, der zwischen 10°und 80°, insbesondere zwischen 20° und 70°, insbesondere zwischen 30° und 60°, insbesondere zwischen 40° und 50° angeordnet sein kann, länglich und gerade ausgebildet. In alternativen Ausführungsformen kann die Borste 7 eine gebogene Form aufweisen. Mit der gestrichelten Linie ist eine gebogene Borste 16 dargestellt, die im Betrieb unter der Fliehkraftwirkung 20 in Richtung der stationären Komponente 4 sich verbiegt und den Spalt 5 verbessert abdichtet. Das Material der Borsten 7 sollte geeignet gewählt werden.

In der Figur 4 ist eine alternative Ausführungsform der Anordnung der Borsten 7 in Richtung der Rotationsachse 2 zu sehen. Die Borsten 7 werden im Vergleich zu Figur 3 nicht schräg eingebaut, sondern in Richtung der radialen Richtung 15, die mit der Fliehkraftrichtung 20 identisch ist. Mit der gestrichelten Linie ist eine Borste unter Fliehkraftbeanspruchung 7' dargestellt. Das Material und die Fliehkraft sind im Betrieb so bemessen, dass die Fliehkraft 20 die Borste 7 in Richtung der Radialrichtung 15 verlängert und einen Spalt 5 dadurch besser dichtet. Die Bürsten sind dabei derart gedehnt, dass sie die stationäre Komponente 4 berühren, aber keinen zu großen Wärmeeintrag zur Folge haben.

## Patentansprüche

1. Rotierende Komponente (1) umfassend eine Bürstendichtung (16).

2. Rotierende Komponente (1) nach Anspruch 1,
wobei die Bürstendichtung (6) mehrere Borsten (7) umfasst, wobei die rotierende Komponente (1) um eine Rotationsachse (2) rotierbar ist,
wobei die Borste (7) derart ausgebildet ist, dass im Betrieb die Borste (7) unter Fliehkrafteinwirkung bewegbar ist.

3. Rotierende Komponente (1) nach Anspruch 2,
wobei die Borsten (7) ohne Fliehkraftwirkung schräg zu einer radialen Richtung (15) bezüglich der Rotationsachse angeordnet sind.

4. Rotierende Komponente (1) nach Anspruch 1 oder 2, wobei die Borsten (7) ohne Fliehkraftwirkung länglich ausgebildet ist.

5. Rotierende Komponente (1) nach Anspruch 2,
wobei die Borsten (7) eine Borstenspitze (17), einen mit der rotierenden Komponente (1) verbundenen Borstenfuß (19) und einen zwischen der Borstenspitze (17) und Borstenfuß (19) angeordneten Borstenkörper (18) umfasst, wobei die Borstenspitze (17) gegenüber dem Borstenkörper (18) eine höhere Masse aufweist.

6. Rotierende Komponente (1) nach Anspruch 5,
wobei die Massendichte der Borstenspitze (17) größer ist als die Massendichte des Borstenkörpers (18).

7. Rotierende Komponente (1) nach Anspruch 5,
wobei die Borsten(7) länglich ausgebildet sind und die Borstenspitze (17) im Wesentlichen kugelförmig ausgebildet ist.

8. Rotierende Komponente (1) nach Anspruch 5,
wobei der Borstenfuß (19) eine Verdickung (8) aufweist, die mit der rotierenden Komponente (1) fest verbunden ist.

9. Rotierende Komponente (1) nach Anspruch 8,
wobei die rotierende Komponente (1) einen Vorsprung (9) zur zumindest teilweisen Ummantelung der Verdickung (8) aufweist.

10. Rotierende Komponente (1) nach Anspruch 8 oder 9, wobei die Verdickung (8) im Wesentlichen zylinder- oder kugelsymmetrisch ausgebildet ist.

11. Rotierende Komponente (1) nach Anspruch 10,
mit einer Halteaussparung (11) in die die Verdickung (8) angeordnet ist.

12. Rotierende Komponente (1) nach Anspruch 11,
wobei die geometrische Form der Halteaussparung (11) im Wesentlichen der geometrischen Form der Verdickung (8) entspricht.

13. Rotierende Komponente (1) nach Anspruch 8,
wobei die Borsten (7) entlang einer Frontplatte (13) angeordnet sind, die aus der Oberfläche (3) der rotierenden Komponente (1) hervorragt.

14. Rotierende Komponente (1) nach Anspruch 13,
wobei die Borsten (7) entlang einer Rückplatte (14) angeordnet sind, die aus der Oberfläche (3) der rotierenden Komponente (1) hervorragt,
wobei die Borsten (7) zwischen der Frontplatte (13) und der Rückplatte (14) angeordnet sind.

15. Rotierende Komponente (1) nach Anspruch 13 oder 14, wobei die Frontplatte (13) in Radialrichtung (15) bezüglich der Rotationsachse (2) verjüngt ausgebildet ist.

16. Rotierende Komponente (1) nach Anspruch 13, 14 oder 15, wobei die Rückplatte (14) in Radialrichtung (15) bezüglich der Rotationsachse (2) verjüngt ausgebildet ist.

17. Rotierende Komponente (1) nach einem der vorhergehenden Ansprüche,
wobei die rotierende Komponente (1) als Rotor ausgebildet ist.

18. Rotierende Komponente (1) nach Anspruch 17,
wobei die Bürstendichtung (6) auf der Rotoroberfläche (3) angeordnet ist.

19. Verfahren zur Abdichtung eines Spalts (5) in einer
Strömungsmaschine,
die einen Rotor (1) und ein um den Rotor (1) angeordnetes Gehäuse (4) umfasst,
wobei eine Bürstendichtung (6) auf der Rotoroberfläche (3) angeordnet wird.

20. Verfahren nach Anspruch 19,
wobei die Bürstendichtung (6) zwischen einer Frontplatte (13) und einer Rückplatte (14) angeordnet wird.

21. Verfahren nach Anspruch 19 oder 20,
wobei die Befestigung der Bürstendichtung (6) im Rotor (1) so angelegt wird, dass eine thermische Dehnung der Bürstendichtung (6) nicht zu einer Verkrümmung des Rotors (1) führt.

22. Verfahren nach einem der Ansprüche 19 bis 21,
wobei die Bürstendichtung (6) Borsten (7) aufweist, die unter Fliehkraftwirkung bewegbar sind und einen Spalt zu einer der rotierenden Komponente (1) gegenüberliegenden stationären Komponente (1) einen Spalt (5) abdichtet.
